# EUROPEAN PATENT APPLICATION

(11) **EP 3 502 207 A1**
(43) Date of publication of application: **26.06.2019**
(21) Application number: 18213043.5
(22) Date of filing: 17.12.2018
(51) Int. Cl.: C09K 8/42, C04B 28/04

(54) **EMULSION OF AQUEOUS-BASED SLURRY IN RESIN AS A WELL SEALANT**

(30) Priority: 19.12.2017 US 201762607755 P; 23.05.2018 US 201815987443
(71) Applicant: CSI Technologies LLC, Houston, TX 77073 (US)
(72) Inventor: WATTERS, Larry Thomas, SPRING, TX Texas 77373 (US); SONNIER, Paul L., HOUSTON, TX Texas 77373 (US); ARCHACKI, David J., THE WOODLANDS, TX Texas 77381 (US); WELTON, Thomas D., THE WOODLANDS, TX Texas 77384 (US); SABINS, Freddie Lynn, SPRING, TX Texas 77389 (US)
(74) Representative: EP&C

(57) **Abstract**

A sealant is provided which is a curable resin external emulsion having a fluid internal phase comprising a curable material which expands during, after or before it cures. The resin external phase is, for example, an epoxy resin which may shrink as it cures. The internal phase is captured within micelles to provide discrete internal phase portions supported in an out resin matrix.

## Description

### CROSS-REFERENCE TO RELATED APPLICATIONS

This application claims benefit of United States provisional patent application serial number 62/607,755, filed December 19, 2017, which is herein incorporated by reference.

### BACKGROUND

### Field

The present disclosure relates to sealants, more particularly, to sealants used to form sealing plugs, or to repair sealing plugs, in the bore or annuli of hydrocarbon and other wells extending inwardly of the earth and into hydrocarbon bearing formations therein.

### Description of the Related Art

Hydrocarbon producing wells commonly consist of a series of telescoping steel pipes, known as casing, installed into a borehole extending inwardly from the earth's surface and to hydrocarbon bearing formations. Once a well is completed, regions of the annular space between the casings and the borehole, or between smaller diameter casings inside larger diameter casing, are typically sealed to prevent leakage of the hydrocarbons from within the casing into the earth at locations between a hydrocarbon producing formation and the earth's surface. For example, when the producing formation(s) has been penetrated by the well, a production casing is run into the well, and a Portland cement sealant is injected into the annulus between the production casing and the earth typically continuously to a location at least several hundred feet above the producing formation. A production tubing is lowered into the well to fluidly connect the producing formation to the surface, and a production packer surrounds the production tubing and seals against the outer surface of the production tubing and the inner surface of the production casing at a location above the producing formation, thereby sealing the area of the production casing above the production packer from exposure to the producing formation, and to the fluids generated therefrom.

Well remedial operations or abandonment operations often require repair of a previously placed, but now failed, seal, or additional sealing of the annuluses, or setting of permanent sealing plugs within the inner volume of the casings, to prevent flow of hydrocarbons from below a sealing location upwardly through the seal and to the earth surface. Remedial operations and abandonment operations thus usually require setting sealant plugs within casing piping such as portions of hydrocarbon recovery conduits and the immediately adjacent annulus, as well as forcing fluid sealants into small openings in previously placed sealants and into small flow channels that may have formed therein over time. These sealing operations are performed using sealants that can be mixed and placed into the well tubings or pipes at the intended sealing locations therefor as fluids, which then harden into a solid seal after their placement. The sealant material must have mechanical properties sufficient to resist stresses imposed thereon by well fluids at or under pressure, withstand forces imposed on the conduit or pipe by mechanical operations for remediation or abandonment of the well, and maintain seal integrity during thermally-induced dimension changes of the conduits and pipes.

For both remedial and well plugging operations, as well as well construction operations, the sealant may be placed in an annulus between adjacent pipes or conduits, as well as within the inner circumference of one or more conduits. The annulus dimensions into which the sealant is pumped for well construction operations typically range from a 0.5-inch annular radius to a 3-inch annular radius (distance between outer wall of inner pipe and borehole and inner wall of outer pipe). Inner pipe diameters can range from 1-1/4 inches to 30 inches. Plugs to seal the interior of a pipe or borehole for remedial or abandonment operations can be required to have diameters ranging from 1 inch to 30 inches. Sealant lengths along the depth direction of the well in both the annulus and bore range from 10 feet to thousands of feet. Sealant application temperatures range from over 400°F to less than 40°F. Some leaks or seal breaches require sealant placement into small openings ranging from leaks in threaded connections, to microannulusses formed between a casing-cement interface, to permeation of a sand bed or formation with a sealant.

Portland cement is the fluid sealant used for over 99% of well sealant applications during construction, remediation, and abandonment, and has been the traditional sealant of choice in the well sealing industry. However, Portland cement seal performance is not ideal and is hampered by the mechanical properties of the material. Namely, Portland cement, once set, is brittle and has low tensile strength. Additionally, as a composite material with a porous structure, set Portland cement is subject to anelastic strain when repeatedly stressed at magnitudes less than its bulk material failure strength. This strain, due to micro-fracturing of the cement matrix, can cause the Portland cement seal in a well to fail after being subjected to repeated low-magnitude stresses caused by routine well operations.

Alternative sealants designed as replacements for Portland cement have been developed with varying degrees of success. Recently, epoxy resin has performed well in applications requiring specialty sealant performance. The attributes of epoxy resin which render an epoxy resin material a Portland cement replacement include that the epoxy resin is initially fluid with viscosity low enough to be pumped and placed in a well, the epoxy resin sets to form a solid, it develops high strength once set, and it is chemically inert once set. The setting reaction rate of the epoxy resin, and thus the time until the epoxy resin, or a percentage thereof, has set, can be controlled by changing the hardener type and hardener concentration and thereby adjust the epoxy setting time and performance to meet sealing requirements in actual or anticipated well conditions. The density of the sealant can also be modified using weighting additives to meet sealing requirements based on the well conditions. Epoxy resin capabilities supersede those of Portland cement as a well sealant since it has significantly higher tensile strength, and bonds more strongly, than does Portland cement. Epoxy resin is cohesive when introduced into a well fluid, as compared to Portland cement which tends to intermix into the well fluid, thus allowing more precise placement of smaller sealant volumes compared to using Portland cement for the same sealing application.

However, epoxy resins exhibit several mechanical and performance properties that are detrimental to their functioning as well sealants. In general, the crosslinking reaction between epoxy and hardener can result in volume reduction of the mass of epoxy resin as it sets, i.e., the epoxy will shrink as it sets. This shrinkage can be exaggerated when using liquid diluents to increase the volume of the epoxy resin based sealant to lower the cost of the sealant per unit volume thereof, or to lower the viscosity of the epoxy resin based sealant for easier delivery thereof to the sealing location of the well. Epoxy resin generally shrinks slightly on curing to its set condition. The magnitude of shrinkage depends on the resin:hardener ratio, the presence and amount of diluents in the mixture, and whether additional setting reaction accelerators are used and the magnitude of the difference between the setting temperature and the ambient temperature of the sealing location in well. This shrinkage during cure or set can weaken the resulting seal, or result in seal failure, depending on the magnitude thereof. In any event, an ability to eliminate or reduce volumetric shrinkage will enhance a resin sealant's effectiveness.

Additionally, the epoxy resin crosslinking reaction as it cures to set is exothermic. Epoxy resins designed as well sealants for low-temperature applications (< 140°F) may contain excess hardener concentration to increase the curing or setting reaction rate in order to produce a solid barrier in a reasonable amount of time. This increased reaction rate creates a large temperature increase in the material as the setting reaction progresses. The maximum temperature reached depends on the accelerator used and the mass of epoxy that is reacting. For large volumes, (over 5 gallons), the maximum temperature due to this reaction exothermic reaction can cause a rise of the temperature of the epoxy of 200°F or even 400°F.

Many effective epoxy based sealants have been developed, and used to seal well bores and annuli, with great success. For example, US 2017/0044864 discloses the use of an epoxy sealant in a squeeze sealing operation, as well as for plugging the internal volume of production tubing and casing. The epoxy resins are inherently better suited to use as a well bore and annulus sealant as compared to Portland cement for the reasons discussed above, but the cost of epoxy resin, as compared to Portland cement, has limited its acceptance in the well sealing field, including the use thereof as the original sealant to form the original "cement" sheath in the well annuli.

### SUMMARY

A sealant is provided which is a curable resin external emulsion having a fluid internal phase comprising a curable material which expands during, after or before it cures. The resin external phase, is, for example, an epoxy resin which may shrink as it cures. The internal phase is captured within micelles to provide discrete internal phase portions supported in an outer resin matrix.

### BRIEF DESCRIPTION OF THE DRAWINGS

Figure 1 is a photomicrograph of a polished surface of sealant composition 1 of Table 4 in the cured state.
Figure 2 is a photomicrograph of a polished surface of sealant composition 2 of Table 4 in the cured state, which has the same composition as composition 1 but is mixed at a higher mixing speed.
Figure 3 is a photomicrograph of a polished surface of sealant composition 3 of Table 4 in the cured state.
Figure 4 is a photomicrograph of a polished surface of sealant composition 4 of Table 4 in the cured state.
Figure 5 is a photomicrograph of a polished surface of sealant composition 5 of Table 5 in the cured state.
Figure 6 is a photomicrograph of a polished surface of sealant composition 6 of Table 5 in the cured state.
Figure 7 is a photomicrograph of a polished surface of sealant composition 7 of Table 5 in the cured state.
Figure 8 is a photomicrograph of a polished surface of sealant composition 8 of Table 6 in the cured state.
Figure 9 is a photomicrograph of a polished surface of sealant composition 9 of Table 6 in the cured state.

### DETAILED DESCRIPTION

Herein, an epoxy resin based sealant having the desirable physical and mechanical properties of an epoxy based sealant is provided, but with a substantially reduced cost as compared to prior epoxy resin sealants. Additionally, the epoxy based resin herein has reduced shrinkage as compared to traditional epoxy resin based sealants. Herein, a multi-component epoxy resin based sealant composition configured as a resin-external emulsion, i.e., an emulsion in which the resin encapsulates or captures at least one aqueous fluid internal phase containing a different material than the epoxy resin, is provided. The aqueous internal phase herein is described as a Portland cement slurry with appropriate admixtures to control set time, physical expansion, density, strength stability, etc., which when mixed with epoxy resin and emulsified, forms a sealant in which small discrete packets of the Portland cement slurry are stably incorporated within an epoxy resin. Other aqueous-based settable, curable or reactive materials can also provide the internal phase. Herein, the aqueous phase is not required to set or cure into a hardened material, but, may do so. The aqueous phase also provides thermal and physical properties which, when combined with the thermal and physical properties of the epoxy resin, result in an epoxy resin based sealant having nearly the advantageous chemical, physical, and mechanical properties of a sealant having only epoxy resin and hardener, while lessening the negative volume loss or reaction exotherm issues encountered with an epoxy sealant a non-epoxy resin exterior emulsion sealant, including Portland cement. As a result, for a given volume of sealant to fulfill a sealing requirement in a well location, the resin exterior emulsion providing the required sealant volume includes only a fractional percentage of the epoxy resin which would have been required to seal the well location if only epoxy resin, additives and hardener were used, while simultaneously providing the enhanced mechanical properties of an epoxy resin based sealant over those of Portland cement, and hence the cost of the epoxy resin based sealant can be significantly reduced, the set and setting properties of the epoxy resin can be enhanced, and the mechanical property advantages of the epoxy resin maintained. For example, the overall shrinkage of the sealant as compared to an only epoxy resin sealant as it cools from the initial set or cured state temperature, to the final in situ temperature, is reduced.

Beneficial sealant performance properties such as dimensional expansion driven by gas generation within the aqueous phase of the emulsion (e. g. from a caustic solution containing aluminum powder) can also deliver bonding and thermal property improvements, and increase the volume of the setting resin by the generation of gas pockets in the emulsion to offset some or all of the shrinkage normally occurring in a setting epoxy resin. These gas volumes can form micro or macro-voids within the volume of emulsion sealant, increasing the internal surface area and the total volume thereof.

Herein, the epoxy resin material of the emulsion may further contain solid particulates, bonding aids, reaction accelerators, etc. In another aspect, the Portland cement slurry composition of the emulsion includes additives such as crystalline expansion additives which increase the volume of the non-epoxy resin portion of the emulsion as, and after, the cement sets in order to offset, or partially offset, the epoxy resin volume reduction caused by the crosslinking reaction of the epoxy resin as it sets or cures.

Herein, in one aspect, an emulsion sealant is provided having sealing properties equivalent to, or substantially equivalent to, a sealant composed of only epoxy resin and hardener, but into which materials are added in order to compensate for the shrinkage of the epoxy as it cools from the setting or curing temperature to the ambient temperature. The inventors herein have recognized that the failures of epoxy resin sealants in the past were in part caused by a lack of understanding of the well conditions, and the sealant cure cycle of the epoxy resin. By understanding that the epoxy resin reaction, in a well bore, can cause significant increases in the temperature of the mass of epoxy resin sealant as compared to the well sealing location ambient temperature, and that the initial setting or curing of the epoxy resin occurs at or close to the peak or greatest temperature reached in the mass of epoxy resin, the inventors herein have come to understand the causes of epoxy sealant failure are being driven by the combination of the heat of the setting reaction and the thermal contraction property of the epoxy resin as it cools after cure. By understanding these issues, the inventors hereof have created new methodologies for formulating sealants including epoxy resin, and likewise have been able to create sealant formulations tailored to well ambient conditions with a very high degree of confidence that they will seal the well, including where other sealants have failed to seal the well. Thus, herein, an epoxy resin containing emulsion is formed, which includes an epoxy resin, and at least one second volume expanding agent, which in combination form the full volume of the sealant, and include a smaller volume of epoxy resin than if an only epoxy resin sealant were used as the sealant, and this epoxy resin based sealant reaches a lower temperature during setting (curing), resulting in less shrinkage of the resin from the set to well ambient temperature, while the shrinkage of the epoxy which does occur is offset by increases in the volume of other components of the emulsion, as well as greater elasticity of the volume of sealant in some implementations, resulting in an epoxy resin based sealant having significantly reduced cost while maintaining, or nearly maintaining, the advantageous mechanical properties of epoxy resin sealant. Additionally, components of the emulsion may include materials having a higher heat capacity than that of the epoxy resin, resulting in a sealant capable of absorbing a greater amount of heat for a given increase in temperature as compared to epoxy alone, resulting in a lower overall temperature increase of the sealant.

The magnitude of the temperature increase of a volume of sealant is dependent on the mass of the epoxy resin therein. For a given epoxy resin mix having a given density, this mass measure is easily mathematically converted to a volume of epoxy per lb. or gram thereof measure. If the mass of epoxy resin in a given volume of sealant required to seal a well location, such as by dilution of the epoxy resin or by replacement of a portion of the epoxy resin with another settable component, is reduced, the overall temperature increase of the resulting sealant mass or volume resulting from the exothermic epoxy resin set or cure reaction is diminished, and thus the thermally-driven volume change after the initiation of set or cure in the mass of epoxy resin is likewise reduced. Additionally, increasing the heat capacity and reducing the coefficient of thermal expansion of the composite, by addition of a cement slurry internal phase in an epoxy resin emulsion, will result in reduced shrinkage of the emulsion, and a reduced maximum temperature reached by the epoxy resin and thus by the emulsion during the exothermic setting reaction. A cement slurry for the internal phase of a resin-external emulsion composition can be formulated with expansion additives, to thereby cause it to expand on setting, or as it is setting, and thereby counteract the volume decrease of the epoxy resin resulting from temperature induced shrinkage of the epoxy resin away from the casing, or the earth in the annulus, due to an otherwise relatively high coefficient of thermal expansion. Alternatively, or additionally, an aqueous solution or suspension of a gas-generating additive is incorporated as the internal phase of the emulsion, and the gas captured in the set resin epoxy emulsion is used to counteract the volumetric reduction of the epoxy resin portion of the emulsion on setting thereof. A resin-external emulsion with cement slurry (cement-in-epoxy resin) or an aqueous gas-generation liquid (gas generator in epoxy resin) results in reduced mass of resin per unit of sealant volume, thereby lowering the exothermic reaction induced maximum temperature of the epoxy resin in the sealant volume while simultaneously compensating for shrinkage of the epoxy resin as it cures to set, and thereby enhances the resulting sealant's effectiveness.

The emulsion herein is formed as a non-aqueous external emulsion where epoxy resin is the liquid external portion, or as a "reverse emulsion", by dispersing an aqueous liquid composition such as water and at least one additional additive in colloidal sized drops into a contiguous organic phase. The emulsion is considered herein as a reverse emulsion, as the water based composition thereof forms colloids which become suspended in the epoxy resin when the resin is in the liquid phase, which then remain encapsulated within the epoxy resin after the epoxy resin has set. Creating a stable reverse emulsion with epoxy as the external phase requires application of shear energy to a mixture of the components, for example epoxy resin and a liquid such as water having particulates mixed thereinto, to disperse the liquid used as the aqueous phase of the emulsion into drops sufficiently small to resist instantaneous or delayed coalescence thereof. Additionally, a surfactant is used to enhance the stability of these drops to increase the likelihood that they will maintain as a separate phase in the emulsion, as a result of the surfactant spreading over the drop surfaces to form micelles therewith. The surfactant molecule typically includes a hydrophobic end that associates with the continuous resin phase of the mixture being emulsified, and a hydrophilic end that associates with the aqueous phase material of the mixture, i.e., the drops, being emulsified. As a result, we have found that small drops, or Micelles, having a diameter ranging from 60 microns to 300 microns for creating a stabilized internal phase hereof, can be formed. As will be described herein, a sealant comprising individual drops or micelles including small quantities of other materials, such as Portland cement, as the liquid phase are emulsified with an epoxy resin, resulting in physically stable drops or micelles being encapsulated within the epoxy resin as the epoxy resin sets. The resulting set sealant forms a matrix of epoxy resin based sealant with encapsulated micelles that has mechanical properties nearly equal to, or equal to, that of an epoxy resin and hardener only sealant and substantially greater than a Portland cement seal, and the shrinkage thereof compared to an epoxy resin and hardener only sealant during the setting reaction is significantly reduced. Furthermore, for a given volume of sealant, the cost per unit volume is significantly less than that of an epoxy resin and hardener only sealant.

Chemical descriptions and physical properties of a range of surfactants that are capable of forming micelles with a water-Portland cement mixture for an aqueous internal phase of an resin external emulsion and help form a stable aqueous phase - resin emulsion capable of maintaining an emulsion state while pumped to a sealing location in a well and over the span time for the epoxy resin to cure to the set condition, are listed below in Table 1. These surfactants have shown varying degrees of emulsification capability, i.e., utility as an emulsifier or emulsifying agent to form a stable aqueous phase - resin emulsion.

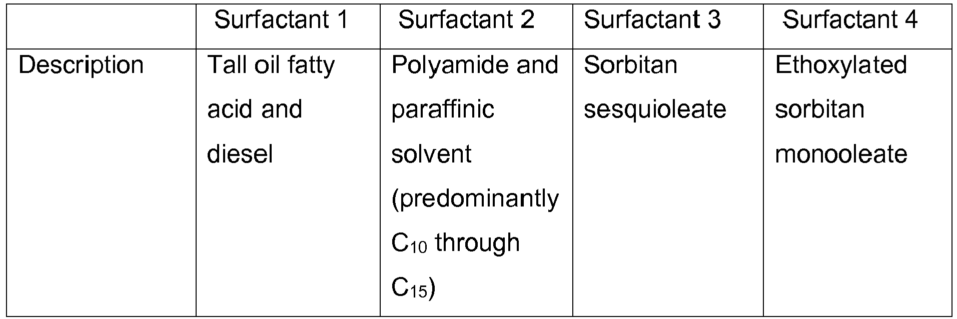

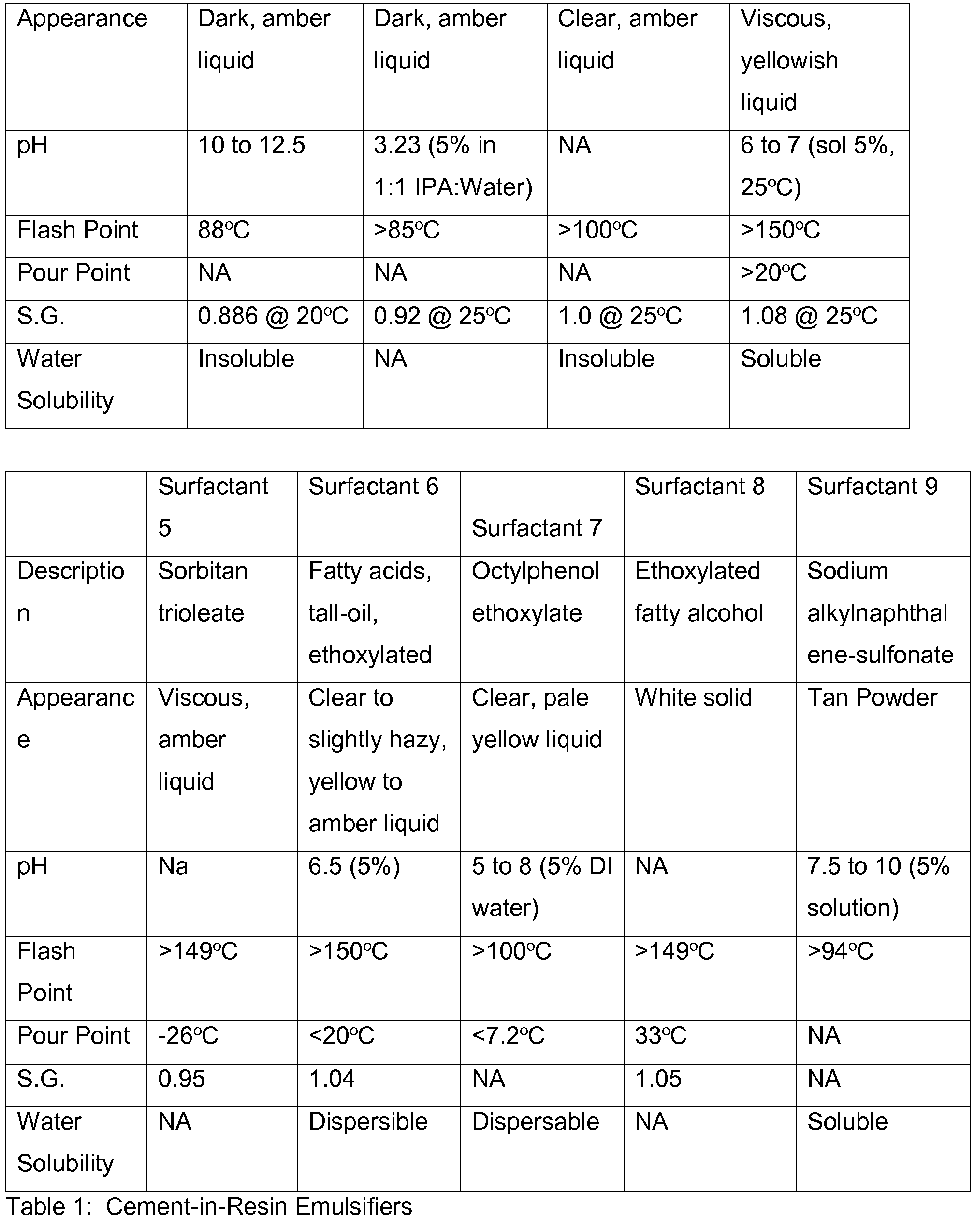

Results of performance testing of cement-in-resin emulsion formulations are presented below. The formulations contain a cement slurry incorporated into an epoxy resin formulation at 10 vol%cement:90 vol% epoxy resin and 30 vol% cement:70 vol% epoxy resin ratios. An additional blend without an emulsifier was tested at 50 vol%cement:50 vol% epoxy resin ratio for comparison.

The epoxy resin and cement formulations mixed with emulsifiers to enable a homogenous mixture of cement and resin to be cured and tested for tensile strength. The formulations were as follows:

**Table 2-Resin formulations**

| Formulation | Resin | Antifoam | Diluent | Hardener A | Hardener B | Emulsion Compositions |
|---|---|---|---|---|---|---|
| 1 | 100.0 wt% | 0.2 wt% | 10.0 wt% | 15.0 wt% | 10.0 wt% | 1,2, 3, 4, 5, 6, |
| 2 | 100.0 wt% | 0,2 wt% | 10.0 wt% | 24.0 wt% | 16.0 wt% | 7, 8, |
| 3 | 100.0 wt% | 0.2 wt% | 10.0 wt% | 18.0 wt% | 12.0 wt% | 9, 10 |

The base cement formulation was 94 lb API Class H cement mixed with 4.3 gal water to a density of 16.4 lb/gal., with an antifoaming agent as well as a Portland cement expanding additive in some cases.

**Table 3-Cement formulations**

| Formulation | Cement | Antifoam | Retarder | Expanding Additive | Water | Emulsion Compositions |
|---|---|---|---|---|---|---|
| 1 | 100 wt% | 0.02 wt% | 0% | 0% | 38 wt% | 1,2,3,4,5,6 |
| 2 | 100 wt% | 0.02 wt% | 0.5 wt% | 0% | 38 wt% | 7,9 |
| 3 | 100 wt% | 0.02 wt% | 0.5 wt% | 5.0 wt% | 38 wt% | 8, 10 |

### Mixing Procedures:

Generally, a cement slurry containing Portland cement, water, and an anti -foaming agent wherein the cement to water ratio is 16.4 Ib./gal, and an epoxy resin formulation, were separately prepared, and then a desired volume of the epoxy resin formulation was placed into a mixer wherein the blade or paddle was operated at a low shear speed, the surfactant was added, and then a desired volume of the cement slurry was added to achieve the above referenced vol.% cement/vol.% epoxy resin ratios, and the blade or paddle speed then significantly increased to include sufficient shear to cause the cement and epoxy resin to form an epoxy resin external emulsion wherein the Portland cement component is preferably encapsulated as a micelle within an outer matrix or support of epoxy resin.

The steps for carrying out mixing are generally as follows:
1) A desired volume of Base Epoxy Resin, Antifoaming agent, Diluent and Hardeners were added together in a table top mixer (IKA RW.2 stand mixer with maximum no-load speed of 2500 rpm with a single 2 ½-inch diameter, 3-blade propeller) in the ratios thereof set forth in Table 2 for two different epoxy resin formulations. This mixture was then mixed at a low rotation speed of the mixing blade, on the order of 1000 rpm or less, to induce low shear mixing/intermixing of the components.
2) The epoxy mixture mixed as set forth above was transferred to a Waring Blender, and the blender was started to operate the mixing blade or paddle at a low shear speed of 4,000 rpm. 10.8 mls of an emulsifier was then added, and then a quantity of one of the already prepared (as per API RP 10B-2) 16.4 Ib./gal of cement slurries as set forth in Table 3 was added thereto. Then the mixing speed was increased to a high shear value of 12,000 rpm, to induce emulsification.
3) The combination of cement slurry, epoxy and emulsifier was mixed for 1 minute at the high blade rpm to induce shear and thus emulsification, the resistivity of the composition was measured, and the resulting emulsion was then conditioned on atmospheric consistometer at 140°F for 30 minutes before the resistivity was again measured,
4) The composition was then poured into an expansion mold, and allowed to cure at a desired ambient temperature for a predetermined number of days. The ambients were selected to evaluate the emulsion sealants performance at a number of temperatures, here three different temperatures, likely to be encountered at sealant locations in a well bore or casing therein.

In the above procedure, for a 90:10 Resin: Cement ratio 270 mls of the resin mixture and 30 mls of the cement mixture were intermixed with the surfactant. For a 50:50 Resin: Cement ratio use 150 mls of each of the epoxy and the cement mixture were intermixed with the surfactant. In each case, the total mixture consisted of 300ml.

After the cure period at the desired ambient, the resulting cured composition was demolded, and the resulting ingot of sealing material was measured dimensionally daily for one week.

### Mixing, Compositions, and Results

Multiple epoxy resin-cement formulations were mixed, cured for a desired number of days, and tested. Three ambient, and thus formulation target, curing temperatures were maintained as the ambient temperature surrounding the sealant during curing: 80°F, 120°F, and 140°F.

The cement composition was mixed at low shear of 4000 rpm for 15 seconds followed by 35 seconds at 12,000 rpm in a Waring blender to provide high shear conditions. This mixing procedure is detailed in API RP 10 B. The resin, antifoaming agent, diluent, and hardeners were mixed in a Waring blender at 4000 rpm to provide low shear conditions as described above before adding the emulsifiers thereinto. For high-shear mixing of the epoxy resin and cement to form the emulsion, the resin was then mixed at a mixing blade speed of 12,000 rpms while adding there into a desired volume of previously mixed cement slurry in a stream, the desired volume being that required to make up the desired epoxy resin mixture to cement slurry volume % ratios as described above. The combined materials in a fluid state were then mixed at the high shear conditions of 12,000 rpm for 1 minute after the cement mixture was added. The electrical resistivity of selected compositions was measured as an indicator of the physical properties of the emulsion formation. Higher resistivity, as discussed below, indicated that the emulsion had an organic contiguous phase, i.e., a resin-external emulsion was formed. For reference, resin with surfactant/emulsifiers but no internal phase has a resistivity of approximately 400 ohm⁻¹ while water resistivity is 1 ohm⁻¹.

2 inch by 4 inch plastic cylinder mold s were filled with the resulting emulsions and allowed to cure at a specified test temperature for 8 days. The cylinder of emulsified resin and cement was demolded by removing the surrounding plastic cylinder therefrom, and a disk cut across the circumference of the resulting cylinder of cured emulsion was taken from the specimen. The resulting cut disk dimensions were 1.97 inch diameter and approximately 0.73 inch width in the cylinder depth direction. The samples were tested for tensile strength using the splitting tensile method, for example as set forth in ASTM Standard D3967.

Tensile strength and resistivity results of a series of resin and cement mixtures with and without emulsifiers, and thus as emulsions or merely as mixtures, cured for 7 days at an 80°F ambient are presented in Table 4. The resin formulation for the compositions in Table 4 is shown in Table 2 and the cement formulation of the compositions in Table 4 is shown in Table 3.

**Table 4-Emulsion performance testing results for an emulsion cured in a 80°F ambient**

| Example compositions | Resin formulation and concentration (vol%) | Surfactant composition and concentration (vol% of total mix) | Cement Formula | Resistivity (ohm⁻¹) | Tensile Strength (psi) |
|---|---|---|---|---|---|
| Resin 1 | 100% resin | None | None | 1999+ | 2900 |
| 1. Epoxy Composition 1 of Table 2 mixed in waring blender for 1 minute at 4000 rpm after cement slurry added | Resin #1 at 10% cement/90% resin | 0.75% Surfactant 1 & 0.75% Surfactant 2 | 1 | 349 | 1530 |
| 2. Epoxy composition 2 of Table 2 mixed in waring blender for 1 minute at 12000 rpm after cement slurry added | Resin #1 at 10% cement/90% resin | 0.75% Surfactant 1 & 0.75% Surfactant 2 | 1 | 480 | 2270 |
| 3. Epoxy composition 2 of Table 2 mixed in waring blender for 1 minute at 12000 rpm after cement slurry added | Resin #1 at 30% cement/70% resin | 0.9 % Surfactant 3 | 1 | 514 | 1250 |
| 4. Epoxy composition 3 of Table 2 mixed in waring blender for 1 minute at 12000 rpm after cement slurry added | Resin #1 at 50% cement/ 50% resin | 0 | 1 | 6 | 430 |

Results of tensile strength and resistivity testing indicate that for a composition having the same cement to epoxy ratio, an increase in blending blade rpm, and thus the shear energy imparted to the mixture being emulsified during mixing, improves the mechanical performance of the resulting emulsion. Microscopic examination of the compositions and resistivity of the mixtures indicate a range of emulsification, and therefore the ability of the sealant to remain in the emulsified state during the time required to deliver it to a sealing location in a well and to cure to set, that corresponds to the resulting magnitude of the tensile strength of the resultant cured material.

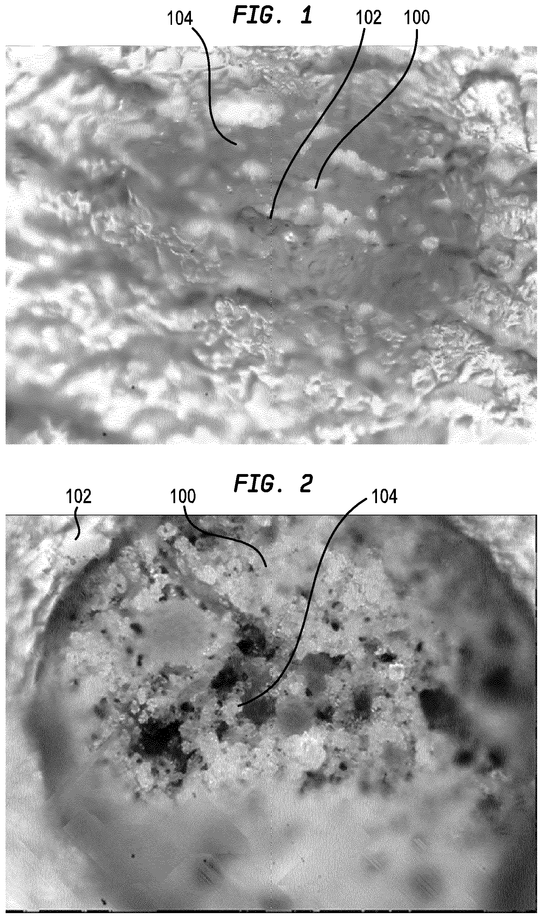

Figures 1 to 4 are photomicrographs of a polished surface of the cured resin-external sealant compositions 1 to 4, respectively. The width of the field captured in each photographmicrograph is approximately 400 microns. For each photomicrograph, a small sample of the cured and set sealant was ground and polished to a thickness on the order of 2mm. In each Figure, the resulting 2mm thick slide of sealant was placed on a transparent mount, and lit from both the front and rear sides thereof to enable revealing on the surface structures at the polished surface as well as the structure of the sealant below the surface. In many cases, during polishing of the slide, the polishing penetrates one or more micelles 100, and the structures of their interior, as well as the definitiveness of their geometry and makeup, are visible.

As shown in Figure 1, wherein example composition #1 of Table 4 is mixed in a 10%cement/90% epoxy resin ratio at low mixing rpm of 4000 rpm and then cured, a poorly formed and relatively small, somewhat elongate (not spherical) micelle 100 is formed, having grains or crystals of Portland cement 102 located within a poorly defined outer wall 104 of the micelle. In comparison, in Figure 2, showing the results of Example composition # 2 of Table 4, where the same mixture of components as that resulting in the sealant of Figure 1 is simply mixed at a higher mixing speed of 12000 rpm, large spherical micelles 100, having well defined walls 102 and a large volume of crystallized Portland cement 104 therein results. This demonstrates that higher mixing speeds induce greater emulsification, and the formation of larger micelles, in the emulsion. Additionally, as shown in Table 4, both Example 1 and Example 2 mixtures had resistivities in the uncured state of at least 349 /ohm. This indicates that an emulsion has been formed of the mixture of epoxy resin, cement and additives.

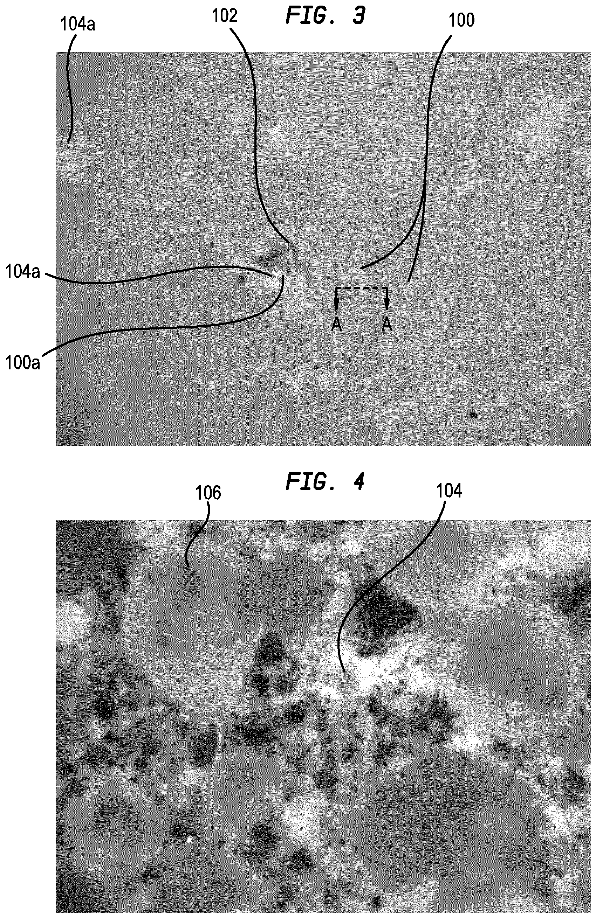

Referring to Figure 3, which is a photomicrograph of the set or cured example composition #3 of Table 4, the change in composition to decrease the epoxy percentage and thus reduce the relative percentage of Portland cement in the mixture, micelles 100 are formed, but they are substantially elongated or string like. Micelle 100a penetrates the plane of the polished surface of the sample of Example 3, substantially at the Plane A-A set forth in Figure 3 with respect to an additional micelle 100. The interior of micelles 100a includes Portland cement crystals 104, bounded by a wall 102, but the size of the micelle is relatively small in section and not spherical. Additionally, Portland cement crystals 104 are present in the epoxy resin, but are not encapsulated in a micelle. The measured resistivity is high, indicating a high degree of emulsification. Figure 4, which shows the resulting structure of the mixture of example composition 4 of table 4, which is a 50/50 mixture by volume of epoxy #1 with Portland cement mixed at high shear (12000 rpm mixing blade speed), shows intermixed regions of Portland cement 104 and epoxy resin 106, and no emulsification as no micelles are present. This comports with the resistivity of the not set or cured mixture taken after mixing, which is only 6/ohm.

Additionally, as set forth in Table 4, the forming of an epoxy exterior/Portland cement inner phase emulsion as described herein provides a sealant having significantly enhanced mechanical strength as compared to that of Portland cement, or a Portland cement-epoxy resin mixture which is not emulsified. The tensile strength of an epoxy only sealant is measured as 2900 psi, whereas the non-emulsified epoxy-Portland cement mixture has a tensile strength of 430 psi. Where an epoxy resin-Portland cement emulsion has been formed, even where the micelles are poorly defined, but Portland cement is discretely encapsulated within the epoxy resin, the tensile strength is significantly greater than a non-emulsion cement-epoxy resin mixture. Moreover, where large and spherical micelles are formed, the tensile strength of the sealant approaches 75 percent of that of an epoxy only based sealant, here, 2270 psi vs. 2900 psi., and large quantities of Portland cement are captured in the micelle to provide expansion of the sealant as it sets, or even post set as the epoxy contracts as it cools from the setting temperature to the well ambient temperature.

As shown in Figure 1, the epoxy mix 1 blended at 4000 rpm with cement slurry and having a ratio of epoxy resin mixture to cement of 90:10,resulted in an epoxy including micelles containing Portland cement crystals 102. However, the wall 104 of the micelle is poorly defined, and the volume of Portland cement contained therein is low. In contrast, Figure 2 shows the polished surface of a sealant sample having all the same components, in the same ratios, as that of the sample of Figure 1, except the mixing speed was 12,000 rpm and not 4000 rpm. The remaining mixing conditions of the two mixtures resulting in the photomicrographs of Figures 1 and 2 were likewise the same. In Figure 2, well-defined micelle 100 with a definitive wall 102 structure, and a high volume of Portland cement crystals 104 formed therein, is clearly present. Thus, increasing the shear energy imparted into the mixture during emulsification greatly improves the structure of the micelles.

Additionally, as shown in Table 4, the tensile strength of the same composition sealant emulsified at two different rpm speeds of the mixing blade shows a significant increase with increased mixing blade rpm and thus increased shear energy imparted to the mixture to emulsify it. Namely the mixture emulsified at 4000 rpm has a tensile strength of 1530 psi, whereas that mixed at 12,000 has a tensile strength of 2270 psi, a nearly 50% increase in tensile strength. As the only difference in the two different compositions, is the namely of compositions 1 and 2 demonstrate that increasing the shear energy imparted into the emulsion during mixing improves the tensile strength of the emulsions.

The composition of example 3, which contained a larger proportion of Portland cement, namely 30% Portland cement to 70% epoxy resin, and a different emulsion stabilizer, than that of compositions 1 and 2, but was mixed at the high shear speed of 12,000 rpm, resulted in a poorly formed emulsion, which as shown in Figure 3 had elongated string like micelles having a significantly smaller size and volume than those of the sealant of Figure 2, and a small quantity of crystallized Portland cement 104a found within the poorly defined micelles. Additionally, large clusters of Portland cement 104b are also present in the cured epoxy resin but are not encapsulated within a Micelle. The tensile strength of this sealant sample was reduced. Thus, shear energy imparted to the epoxy resin-Portland cement mixture, when mixing, is not by itself sufficient to form a stable emulsion with mechanical properties approaching those of cured epoxy resin alone. This is borne out by the results of testing of composition example 4, where a 50-50 volume percent mixture of resin and cement was mixed at 12000 rpm, and no emulsifier, were intermixed, as well as example 7 as will be described herein, where a 50-50 volume percent mixture of resin and cement, and an emulsifier, were intermixed. The resulting cured compositions had low tensile strength, low resistivity, and as seen in the photomicrograph of the polished surface of the cured composition number 4 of Figure 4, no resin-external emulsion was formed.

**Table 5-Emulsion performance testing results for an emulsion cured at a 120°F ambient**

| Example Composition | Resin formulation and concentration (vol%) | Surfactant composition and concentration (vol% of total mix) | Cement Formula | Resistivity (ohm⁻¹) | Tensile Strength (psi) |
|---|---|---|---|---|---|
| 5 | Resin # 1 at 10% Portland cement/ 90% epoxy resin | 3.6% Surfactant 5 | 1 | 168 | 2635 |
| 6 | Resin # 1 at 30% Portland cement/ 70% epoxy resin | 3.6% Surfactant 5 | 1 | 270 | 1125 |
| 7 | Resin # 1 at 50% Portland cement/ 50% epoxy resin | 3.6% Surfactant 5 | 1 | 17 | 675 |

Tensile strength and resistivity testing of compositions maintained at 120°F for 7 days demonstrated similar trends as the 80°F data. Note here that the surfactant used in all three example compositions 5 to 7 is the same, but is a different surfactant than those used in examples 1 to 4. Also, the high shear speed of 12000 rpm was employed for mixing these mixtures. The results of testing indicated that a larger concentration of this emulsifier at the test temperature is required to produce stable emulsions as the relative concentration of cement to epoxy resin in the emulsion increases. Comparing example 5 here to example 2 of Table 4, where the mix includes only 90 percent epoxy resin and 10 percent Portland cement, by increasing the quantity of emulsifier in the 70 percent epoxy-30 percent Portland cement mix from 1.5 to 3.6 percent the resulting tensile strength of the sealant increased to approximately 90 percent of that of an epoxy resin only sealant. In contrast, comparing example 3 of Table 4 to example 6 of Table 5, where the mixture is 70 percent epoxy resin and 30 percent Portland cement, changing the emulsifier total percentage from 1.5 to 3.6 resulted in no meaningful difference in the resulting tensile strength of the cured emulsion, 1125 psi for example 6 and 1250 for example 3.

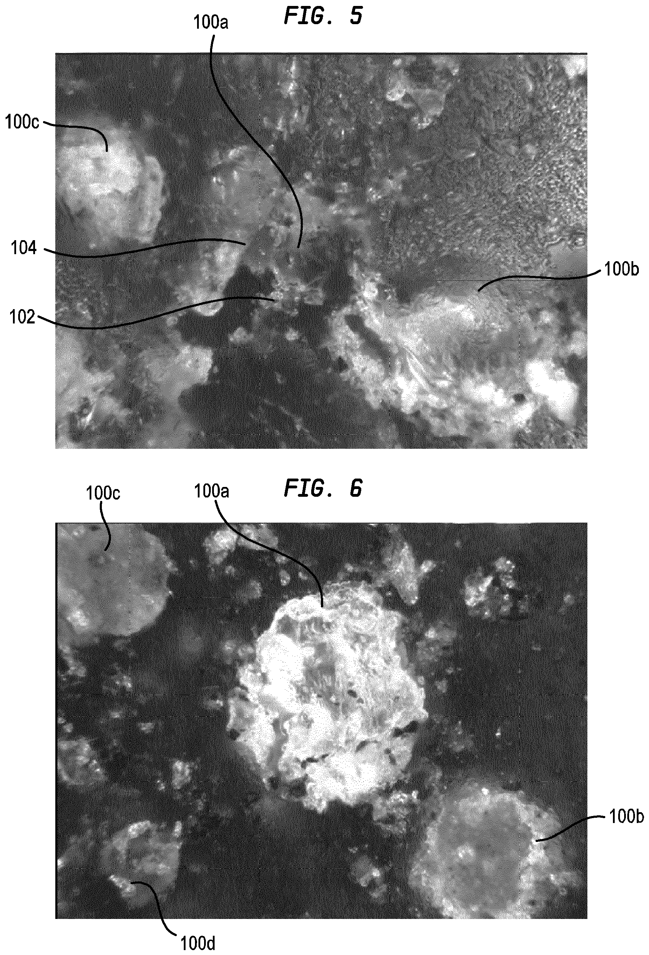

Tensile and resistivity results indicated improved performance from the stable emulsions of compositions 5 and 6 as compared to composition number 7. Composition 7 did not produce results indicative of a stable emulsion. Visual inspection of Composition 7 confirmed segregation and water breakout. Figures 5, 6, and 7 confirms these results.

Referring to Figure 5, the sliced and polished surface of the cured sealant of example composition # 5 shows a plurality of micelles 100a, b and c, wherein the plane of the polished surface has penetrated micelle 100b, revealing the presence of Portland cement crystals 102, having a well-developed wall surface 104. The photomicrograph here is 500 times actual size, and the plurality of micelles 100a, b and c are generally spherical in shape, and no free Portland cement is shown. As set forth in table 5, the tensile strength is very close to that of epoxy resin, and the resistivity is indicative, at the unset stage of the example mixture, that an emulsion is present.

In Figure 6, which is also at 500 times actual size, the internal structure of the cured sealant of example composition #6 is shown, wherein micelles 100a, b and c are present, none have broken the polished plane of the sample, and they are spherical in shape. Here, the tensile strength is similar to the sealant having same epoxy-cement ratio composition of Table 4, and the resistivity of the non-set composition is indicative that an emulsion is formed.

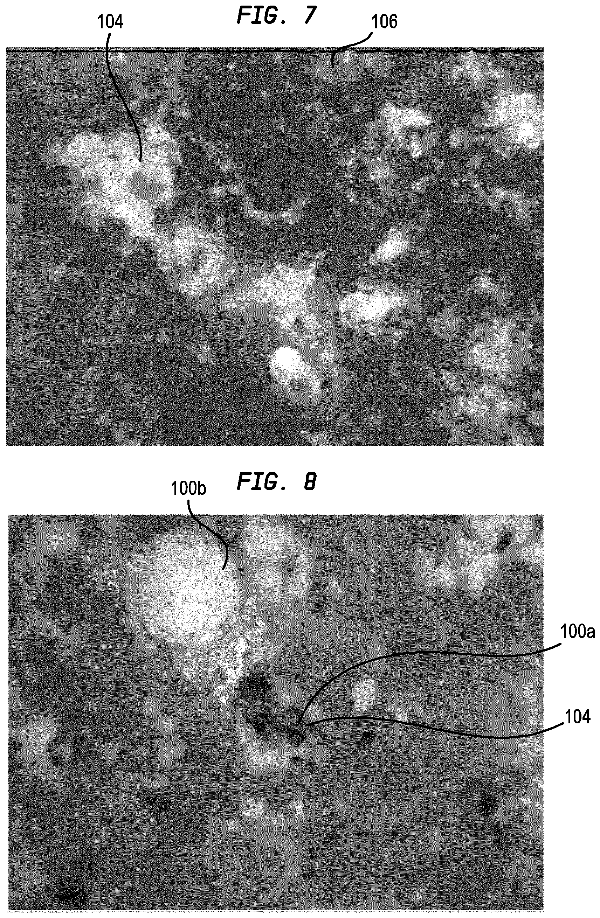

In Figure 7, where the sample surface is shown at 200 times magnification, discrete regions of epoxy resin and Portland cement are present, and no micelles are detected. In the formulation of Example 7, the structure of the cured sealant thereof shown in Figure 7, an emulsifier is present, as opposed to the same 50:50 ratio of epoxy resin and cement of example 4, where no emulsifier was used. But, despite the presence of the emulsifier in Example 7, emulsification cannot be detected. Likewise, the resistivity is very low, indicating no, or very little, emulsification, occurred during mixing of example 7. This indicates that there is an upper limit of epoxy resin to Portland cement ratio that can be used to form an emulsion and reap the benefits of the emulsion as a sealant.

**Table 6-Emulsion performance testing results for an emulsion cured at 140°F**

| Example composition | Resin formulation and concentration (vol%) | Surfactant composition and concentration (vol% of total mix) | | Cement Formula | Resistivity (ohm⁻¹) | Tensile Strength (psi) |
|---|---|---|---|---|---|---|
| 8 | Resin # 2 at 30% Portland cement/ 70% epoxy resin | 3.6% Surfactant 5 | | 2 | 1575 | 1210 |
| 9 | Resin # 2 at 30% Portland cement/ 70% epoxy resin | 3.6% Surfactant 5 | | 3 | 1070 | 970 |
| 10 | Resin # 2 at 100% epoxy resin | None | | None | +1999 | 4040 |
| 11 | None | None | | Cement 2 at 100 vol% | 1 | 530 |
| 12 | None | None | | Cement 3 at 100 vol% | 1 | 390 |

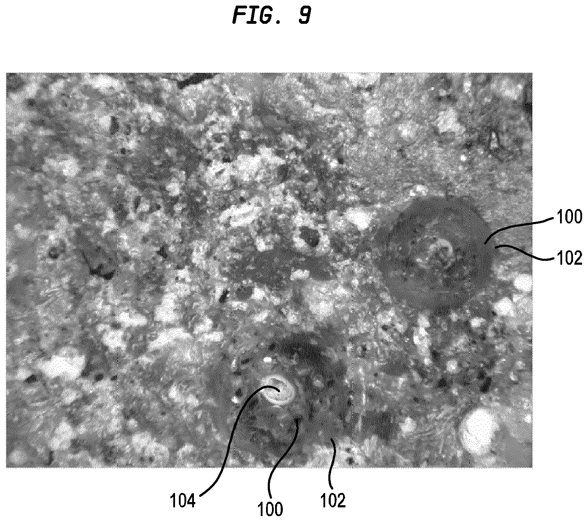

In the compositions of Table 6, the epoxy resin is different than that of shown in Tables 4a and 5, two different cement formulas are shown. For a cement only sealant, the tensile strength is relatively low for the two different sealants, 530 and 390 psi. For the epoxy resin alone,(example 10) the tensile strength is very high, 4040 psi. The results of examples 8 and 9 show that reducing the tensile strength of the Portland cement detrimentally affects the tensile strength of the resulting emulsion. In Figure 8, the internal structure of the cured sealant of example composition #8 shown at 500 times actual size shows well formed micelles, wherein micelle 100a has been cleaved by the polished plane of the sample revealing crystals of Portland cement therein. Figure 9 showing the internal structure of cured composition example #9, likewise magnified 500 times actual size, shows well formed spherical micelles 100.

**Table 7-Reaction Exotherm and Thermal Properties of Emulsions compared to Resin**

| Composition and Temperature | Adiabatic Exotherm (°F) | Cₚ (MJ/m³K) | k (W/mK) | Thermal Expansion (µin/in/°F) |
|---|---|---|---|---|
| Example 2 | 283 | -- | -- | -- |
| Example 5 | 245 | -- | -- | -- |
| Example 8 | 235 | 2.41 | 0.386 | 45.0 |
| Resin 1 @ 80°F | 310 | -- | -- | -- |
| Resin 2 @ 140°F | 319 | 1.48 | 0.290 | 48.6 |

Heat of reaction and thermal property measurements for the emulsions with varying concentrations of Portland cement and cured at various temperatures are compared against base resins in Table 7. Adiabatic exotherm data confirm the dilution effect of adding the cement internal phase in the emulsion resulting in a significantly reduced peak temperature of reaction, 319 vs 235 F. Thermal expansion data for Emulsion 7 and Resin 2 illustrate slight decrease in coefficient of thermal expansion with the addition of the cement internal phase. Cₚ and k data illustrate thermal property improvements resulting from an emulsion. Note that heat capacity Cₚ of Emulsion 7 increases by about 67% compared to neat resin, i.e., epoxy resin alone as the sealant material, while the thermal conductivity k increases by about 33%.

**Table 8 -Expansion at 140°F**

| Composition | Resin formulation and concentration (vol%) | Surfactant composition and concentration (vol% of total mix) | Cement Formula | Expansion % | | | |
|---|---|---|---|---|---|---|---|
| | | | | 1-day | 2-day | 3-day | 7-day |
| Cement 2 | na | Na | 2 | -0.002 | -0.001 | -0.002 | -0.005 |
| Cement 3 | na | Na | 3 | 0.008 | 0.010 | 0,021 | 0,032 |
| Example 8 | 3 at 30% Portland cement, 70% epoxy resin | 3.6% Surfactant 5 | 2 | -0.055 | -0.132 | -0.117 | -0.217 |
| Example 9 | 3 at 30% Portland cement, 70% epoxy resin | 3.6% Surfactant 5 | 3 | -0.009 | -0.032 | 0.006 | 0.002 |
| Resin 3 | 3 | na | na | -0.007 | -0.018 | -0.006 | -0.045 |

Expansion data at 140°F confirm the function of expanding Portland cement as the internal phase of the emulsion counteracts unrestrained dimensional shrinkage. A negative value of expansion represents percentage shrinkage of the volume of emulsion sealant. Design criteria require balancing the set time of the resin with setting and post setting expansion of the cement. The cement setting must be retarded sufficiently (much longer than normal) to deliver expansion to the seal after resin has hardened but before it becomes too brittle. One skilled in the art will recognize that a wide variety of resin and cement formulations can be employed to exhibit equal of better expansion results over a temperature range from 80°F to 250°F.

Where a cement that itself shrinks as it cures is used in the emulsion, here cement formulation 2 of Table 3, the emulsion likewise shrinks as it sets, as demonstrated by the "expansion" result of example 8 where the emulsion sealant shrank by slightly more than 0.2 percent in 7 days as the epoxy resin cured. In contrast, where a cement which expands as it cures is employed, here cement number 3 of Table 3, the resulting emulsion sealant does not achieve significant shrinkage during cure, and because the cement sets more slowly than the epoxy resin cures, the cement continues to expand toward the end of, or after, the epoxy resin curing term, as shown by the shrinkage of the emulsion of example 9 until day 3, and the ultimate slight expansion of the sealant at the end of the 7 day period. The data set forth in Table 8 demonstrate that the incorporation of an expanding cement, the curing of which is properly retarded, will balance out the shrinkage of the epoxy of the emulsion sealant to result in an emulsion based sealant with little, or no, shrinkage upon cure.

As set forth herein, a seal having nearly the mechanical properties of a sealant which uses epoxy only as the sealing material therein can be formulated and applied as a sealant, while reducing the cost of the sealant by incorporating lower priced Portland cement, and still achieve sealant mechanical properties within 75 percent of those of epoxy resin sealant, and without the shrinkage encountered using an epoxy resin only sealant.

To seal a well location, a stable reverse emulsion containing a non-epoxy resin expanding component, such as Portland cement as detailed herein, is formulated to have appropriate rheology, density, handling time, and mechanical properties under sealant application conditions. The material is then placed into the well by pumping, dump bailing, or gravity displacement with the in situ well fluids, to locate the sealant at the desired sealing location such as a location in the well pipe, annulus, or even an open hole, and allowed to set as a solid and form a barrier to fluid flow therepast.

Alternatively, the material is formulated and placed as described above adjacent to a permeable formation or an area in the well with a very small hole or holes which has resulted in a pathway for a slow leak of fluids. While the emulsion is still fluid, differential pressure is applied to force the emulsion into the permeability or small leak path. The fluid in the leak path or pores in the permeable formation and then hardens along with the emulsion in the well to form a barrier to fluid flow.

The invention can be described by the following clauses:
1. A sealant comprising a curable resin external emulsion having a fluid internal phase comprising an aqueous material.
2. The sealant of clause 1, wherein at least a portion of the fluid internal phase is encapsulated in micelles.
3. The sealant of clause 2, wherein the fluid internal phase comprises Portland cement.
4. The sealant of clause 3, further comprising an emulsifier, wherein the micelles include walls comprising the surfactant.
5. The sealant of clause 1, wherein at least a portion of the micelles are spherical.
6. The sealant of clause 4, wherein the surfactant includes at least one of a combination of an organic acid and diesel fuel, polyamide and a paraffinic solvent, sorbitan sesquioleate and ethoxylated sorbitan monooleate.
7. The sealant of clause 4, wherein the surfactant includes at least one of Sorbitan trioleate, fatty acids, tall-oil, ethoxylated, octylphenol ethoxylate, ethoxylated fatty alcohol and sodium alkylnaphthalene-sulfonate.
8. The sealant of clause 1, wherein the resin is an epoxy resin that shrinks while curing.
9. The sealant of clause 1, wherein the aqueous phase includes a component which expands.
10. A sealant comprising a curable resin external emulsion having a fluid internal phase comprising a curable material which expands during, before, or after it cures.
11. The sealant of clause 10, wherein at least a portion of the fluid internal phase is encapsulated in micelles.
12. The sealant of clause 11, wherein the fluid internal phase comprises Portland cement.
13. The sealant of clause 11, further comprising an emulsifier, wherein the micelles include walls comprising the surfactant.
14. The sealant of clause 10, wherein at least a portion of the micelles are spherical.
15. The sealant of clause 13, wherein the surfactant includes at least one of a combination of an organic acid and diesel fuel, polyamide and a paraffinic solvent, sorbitan sesquioleate and ethoxylated sorbitan monooleate.
16. The sealant of clause 13, wherein the surfactant includes at least one of Sorbitan trioleate, fatty acids, tall-oil, ethoxylated, octylphenol ethoxylate, ethoxylated fatty alcohol and sodium alkylnaphthalene-sulfonate.
17. The sealant of clause 10, wherein the resin is an epoxy resin that shrinks while curing.
18. A sealant comprising a curable resin external emulsion with resin external phase, a fluid internal phase comprising a curable material, and a surfactant molecule to stabilize the emulsion.
19.The sealant of clause 18, wherein the internal phase comprises micelles having a width of 60 microns to 300 microns.
20. The sealant of clause 18, wherein the sealant has a resistivity, prior to cure thereof, greater than 400 ohm-1.

## Claims

1. A sealant comprising a curable resin external emulsion having a fluid internal phase comprising an aqueous material.

2. A sealant comprising a curable resin external emulsion having a fluid internal phase comprising a curable material which expands during, before, or after it cures.

3. A sealant comprising a curable resin external emulsion with resin external phase, a fluid internal phase comprising a curable material, and a surfactant molecule to stabilize the emulsion.

4. The sealant according to any one of the preceding claims 1-3, wherein at least a portion of the fluid internal phase is encapsulated in micelles.

5. The sealant according to any one of the preceding claims, wherein the fluid internal phase comprises Portland cement.

6. The sealant according to any one of the preceding claims, further comprising an emulsifier, wherein the micelles include walls comprising the surfactant.

7. The sealant according to any one of the preceding claims, wherein at least a portion of the micelles are spherical.

8. The sealant according to claim 6, wherein the surfactant includes at least one of a combination of an organic acid and diesel fuel, polyamide and a paraffinic solvent, sorbitan sesquioleate and ethoxylated sorbitan monooleate.

9. The sealant according to claim 6, wherein the surfactant includes at least one of Sorbitan trioleate, fatty acids, tall-oil, ethoxylated, octylphenol ethoxylate, ethoxylated fatty alcohol and sodium alkylnaphthalene-sulfonate.

10. The sealant according to any one of the preceding claims, wherein the resin is an epoxy resin that shrinks while curing.

11. The sealant according to any one of the preceding claims, wherein the aqueous phase includes a component which expands.

12. The sealant according to any one of the preceding claims, wherein the internal phase comprises micelles having a width of 60 microns to 300 microns.

13. The sealant according to any one of the preceding claims, wherein the sealant has a resistivity, prior to cure thereof, greater than 400 ohm-1.
